# EUROPEAN PATENT APPLICATION

(11) **EP 1 394 231 A1**
(43) Date of publication of application: **03.03.2004**
(21) Application number: 02717142.0
(22) Date of filing: 12.04.2002
(51) Int. Cl.: C09J 7/02

(54) **ADHESIVE SHEET AND PRODUCTION METHOD THEREFOR**

(30) Priority: 17.04.2001 JP 2001118172
(71) Applicant: Lintec Corporation, Tokyo 173-0001 (JP)
(72) Inventor: SHIBANO, Tomishi, Higashimatsuyama-shi, Saitama 355-0003 (JP); MITSUHASHI, Masafumi, Atsugi-shi, Kanagawa 243-0121 (JP); TOTSUKA, Toshiaki, Kumagaya-shi, Saitama 360-0162 (JP); TSUTSUI, Toshihiro, Itabashiku, Tokyo 173-0012 (JP)
(74) Representative: Gille Hrabal Struck Neidlein Prop Roos
(86) International application number: PCT/JP2002/003701
(87) International publication number: WO 2002/086004

(57) **Abstract**

The present invention provides a adhesive sheet which comprises a base material, a photocured urethane resin layer formed on all or a part of a surface of the base material or a surface of backside of the base material and an adhesive layer, wherein the adhesive layer comprises a polyurethane adhesive, and has a ball tack value of not more than 3 and a pressure-sensitive adhesive strength value to stainless steel board in Japanese Industrial Standard Z0237 of not more than 2 N/cm and a method of preparing thereof.

The adhesive sheet of the present invention can prevent adhesive residue to the article and the like which were bound by the adhesive sheet, discoloration and stain of the bound portion on the article and the like, and inflammation of skin. Further, the adhesive sheet can be utilized for a binding band, a label and a binding tape which can prevent a discoloration and a decrease of pressure-sensitive adhesive strength after long term storage.

## Description

### FIELD OF THE TECHNOLOGY

The present invention relates to an adhesive sheet that can be used as binding bands for distinguishing a medical patient and the like, fixing bands for an intravenous drip needle, display labels and management labels for consumer goods, articles and the like, and further binding tapes for various articles such as medical tubes, cables for office automation devices, wires, flowers, documents and posters, or can be used for packing articles, and a method of preparing thereof.

### BACKGROUND OF THE TECHNOLOGY

Binding tapes have been employed conventionally for binding bundles of articles such as tubes, cables and wires. The binding tapes do not adhere to the surface of the article to be bound, and only the adhesive layers of the binding tape are adhered by pressure-sensitivity. In the adhesive layer of the conventional binding tapes, natural rubber, butyl rubber, polyisoprene rubber and acrylic pressure-sensitive adhesive have been used.

The conventional binding tapes, however, have defects that adhesive residue on the bound articles, and discoloration and stain of the article are caus ed as time passed after binding the articles, or paper peeling, breaking and the like are caused by strong pressure-sensitive adhesive strength in articles having weak strength such as papers when the binding tape is peeled from the articles having weak strength after binding the articles. Further, there are problems that in general, discoloration of the binding tapes and a decrease of pressure-sensitive adhesive strength are caused easily when the binding tape are kept for long term, and it is difficult to obtain the high transparency because of the used adhesive.

Also, display labels and management labels for displaying a mark by winding around consumer goods, articles or the like have been employed. The conventional display labels and management labels have the same problems as the above-described binding tapes.

Furthermore, in recent years, it is suggested that the conventional binding tapes are utilized as distinguishing tapes for winding around the wrist or the ankle of the medical patient and the like. However, there are problems that the conventional binding tapes cause inflammation of skin by the tackiness.

The present invention is achieved in view of the situation of the conventional technology described above. The objection of the present invention is to provide an adhesive sheet that can prevent adhesive residue on the article or the like which were bound by the adhesive sheet, discoloration and stain of the article or the like, inflammation of skin, and adhesion to the articles or the like, and further, can be utilized for a binding band, a label, a binding tape or the like which can prevent the discoloration and the decrease of pressure-sensitive adhesive strength after long term storage, and a method of preparing thereof.

As a result of many efforts by the present inventors to solve the above described problems, it was found that the object of the present invention is achieved by providing an adhesive layer comprising a polyurethane adhesive and having a ball tack value of not more than 3 and a pressure-sensitive adhesive strength value to stainless steel board in Japanese Industrial Standard Z0237 of not more than 2 N/cm and a photocured urethane resin layer on the surface of the base material or the surface of backside of the base material and by laminating the both layers when binding articles. And thus the present invention is completed based on the above finding.

### DISCLOSURE OF THE INVENTION

That is to say, the present invention provides an adhesive sheet which comprises a base material, a photocured urethane resin layer formed on all or a part of a surface of the base material and an adhesive layer formed on all or a part of a surface of backside of the base material, wherein the adhesive layer comprises a polyurethane adhesive, and has a ball tack value of not more than 3 and a pressure-sensitive adhesive strength value to stainless steel board in Japanese Industrial Standard Z0237 of not more than 2 N/cm.

The present invention also provides an adhesive sheet which comprises a base material, a photocured urethane resin layer formed on a part of a surface of the base material and an adhesive layer formed on another part of a surface of the base material, wherein the adhesive layer comprises a polyurethane adhesive, and has a ball tack value of not more than 3 and a pressure-sensitive adhesive strength value to stainless steel board in Japanese Industrial Standard Z0237 of not more than 2 N/cm.

Further, the present invention provides the adhesive sheet, wherein the photocured urethane resin layer is prepared byphotocuringurethane (meth) acrylate in the above described adhesive sheet.

Furthermore, the present invention provides a method of preparing an adhesive sheet which comprises applying a polyurethane adhesive solution on all or a part of a surface of a base material or a surface of backside of the base material and drying to form an adhesive layer having a ball tack value of not more than 3 and a pressure-sensitive adhesive strength value to stainless steel board in Japanese Industrial Standard Z0237 of not more than 2 N/cm, and applying a photocurable urethane curing component on all or a part of the surface of the base material and then irradiating light to form a photocured urethane resin layer.

### BRIEF DESCRIPTION OF THE DRAWINGS

FIG. 1 shows a cross-section view of an adhesive tape of one embodiment of the invention;
FIG. 2 shows a cross-section view of an adhesive tape of another one embodiment of the invention;
FIG. 3 shows a cross-section view of an adhesive tape of other one embodiment of the invention;
FIG. 4 shows a cross-section view of an adhesive tape of the other one embodiment of the invention;
FIG. 5 is a cross-section showing a state that an adhesive tape of one embodiment of the invention bound the article.

In drawings, 1 means an adhesive tape, 2 means a base material, 3 means a photocured urethane resin layer, 4 means an adhesive layer, 5 means a release liner and 6 means a printing layer.

### DETAILED DESCRIPTION OF THE PREFERRED EMBODIMENTS

In the present invention, the base material includes various paper materials, metallic foils, and films and sheets of plastic such as polyolefin resins like polyethylene resins and polypropylene resins, polyester resins like polybutylene terephthalate resins and polyethylene terephthalate resins, acetate resins, polystyrene resins and vinyl chloride resins. Also, papers having the surface-treated with resins, such as laminated papers and coated papers can be used as the base material. Among them, films and sheets of vinyl chloride resins and polyester resins are preferable. The base material may be composed of only one layer or by multi-layers of not more than 2 layers. The base material may be not oriented, or may be oriented in uniaxially or biaxially directions in length or width.

Thickness of the base material does not have any limitation. However, the thickness is generally in the range of 30 to 300 µm and preferably in the range of 50 to 200 µ m for binding or laminating, and the thickness is generally in the range of 0.5 to 10 mm and preferably in the range of 2 to 7 mm for packing.

The base material may be colored or colorless and transparent. Moreover, general printing or character printing may be given on the surface of the base material or the surface of backside of the base material. For this purpose, a print receiving layer allowing thermal transfer, ink jet and laser printing, screen printing, or a printing performance improved layer etc. may be provided on the base material.

In the present invention, the photocured urethane resin layer is formed on the surface of the base material. As photocurable urethane curing components which are raw material of the photocured urethane resin layer, urethane(meth)acrylate is preferable. The urethane(meth)acrylate is a reaction product of a polyol, a polyisocyanate and a hydroxyl group-containing (meth)acrylate and has one or more photopolymerizable (meth)acryloyl group.

The polyol includes polyether polyols such as polyoxyalkylene polyol, polyester polyols, ethylene glycol and propylene glycol. The polyols may be aliphatic polyols or aromatic polyols.

The polyisocyanate includes aromatic polyisocyanates such as tolylene diisocyanate, xylylene diisocyanate and diphenylmethane diisocyanate, alicyclic polyisocyanates such as hydrogenated tolylene diisocyanate, hydrogenated xylylene diisocyanate and hydrogenated diphenylmethane diisocyanate, aliphatic polyisocyantes such as hexamethylene diisocyanate and 2,2,4-trimethyl hexamethylene diisocyanate.

The hydroxyl group-containing (meth)acrylate includes hydroxyethyl(meth)acrylate, ethylene glycol di(meth)acrylate, propylene glycol di(meth)acrylate, butylene glycol di(meth)acrylate, neopentyl glycol di(meth)acrylate, hexanediol di(meth)acrylate, trimethylolethane tri(meth)acrylate, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, glycerol tri(meth)acrylate and di(meth)acrylate modified with bisphenol A ethylene oxide. The hydroxyl group-containing (meth)acrylate can be used by single member or a combination of two or more members.

The photocurable urethane curing components have preferably two or more (meth)acryloyl groups in the molecule and more preferably two (meth)acryloyl groups.

The photocurable urethane curing component can be used by single member or a combination of two or more members.

The weight average molecular weight of the photocurable urethane curing component is preferably in the range of about 1000 to 20000, more preferably in the range of 3000 to 15000.

Into the photocurable urethane curing component, photopolymerization initiators, other photopolymerizable monomers, other resins, additives and solvents can be added according to needs.

A glass transition temperature (Tg) of the photocured urethane resin obtained by curing the photocurable urethane curing component is preferably not less than -30°C, more preferably in the range of -10°C to 110°C, most preferably in the range of 20°C to 100°C. When Tg is less than -30°C, sticky feeling may be generated. When Tg is more than 110°C, there is a trend that the photocured urethane resin layer is broken easily.

The photocurable urethane curing component are applied on the surface of the base material and cured by light irradiation to form the photocured urethane resin layer on the surface of the base material. The application of the photocurable urethane curing component can be performed by various application methods such as label printer and screen printing.

The irradiated light includes electromagnetic waves such as visual ray, ultraviolet ray and electron ray. Preferably, ultraviolet ray can be used. As the ultraviolet ray, ultraviolet ray radiated from an ultraviolet lamp can be usually used. As the ultraviolet lamp, the ultraviolet lamp which emit an ultraviolet ray having a spectrum distribution in the area of 300 to 400 nm of wave length can be usually used.

The photocured urethane resin layer in the present invention has extremely low tackiness, and a ball tack value of not more than 3, preferably not more than 2 and more preferably less than 2.

The thickness of the photocured urethane resin layer is not limited particularly, but in general, preferably not less than 1, more preferably in the range of 1 to 40 µm, most preferably in the range of 1 to 20 µm. When the thickness is less than 1 µm, sufficient adhesive strength may be not obtained. When the thickness is more than 40 µm, there is no change of the adhesive strength, but it is not economical because of increase of light irradiation amount for curing.

In the present invention, the photocured urethane resin layer is formed on the surface of the basematerial. An adhesive strength increasing layer can be formed between the surface of the base material and the photocured urethane resin layer. Also, a printing layer can be formed on the surface of the base material. The printing layer can be formed on the surface of the photocured urethane res in layer, or under the photocured urethane resin layer.

In the present invention, the adhesive layer comprising the polyurethane adhesive is formed on the surface of the base material. An adhesive strength increasing layer can be formed between the surface of the basematerial and the adhesive layer.

The adhesive layer in the present invention has characteristic to have extremely low tackiness, and a ball tack value is not more than 3, preferably not more than 2 and more preferably less than 2. If a ball tack value exceeds 3, adhesive can remains on the surface of articles on which binding or the like is applied.

Moreover, the adhesive layer in the present invention has pressure-sensitive adhesive strength value to a stainless steel board according to Japanese Industrial Standard Z0237 of not more than 2 N/cm, and preferably not more than 1.5 N/cm.

In addition, adhesive strength value between the adhesive layer and the photocured urethane resin layer can be set in various values from weak strength to strong strength. The adhesive strength is preferably not less than 0.5 N/cm for uses of weak adhesive strength, and preferably not less than 2 N/cm for uses of strong adhesive strength. The upper limit of the adhesion strength between the adhesive layer and the photocured urethane resin layer is not limited particularly, but about 50 N/cm. Here, the adhesive strength is an adhesive strength at 30 minutes after adhesion by pressing.

A polyurethane adhesive layer has characteristic that strong adhesive strength is obtained immediately after adhesion of the adhesive layer and the photocured urethane resin layer, and the obtained adhesive strength maintains as it is.

Furthermore, with respect to the adhesive layer, type A durometer hardness according to Japanese Industrial Standard K6253 of the adhesive layer is preferably not less than 20, more preferably in the range of 30 to 100, and further preferably in the range of 40 to 80. When the type A durometer hardness is less than 20, there is the fear that the adhesive remains on articles on which binding or the like is applied. On the other hand, sufficient adhesive strength may not be obtained when the hardness is more than 100.

The polyurethane adhesive employed in the above described adhesive layer is composed of a soft segment mainly comprising a long-chain polyol and a hard segment comprising a diisocyanate and a chain extender. As the long-chain polyol, polyester polyol, polyether polyol are mainly employed, and as the diisocyanates, TDI(tolylene diisocyanate), MDI(diphenylmethane diisocyanate), HDI (hexamethylene diisocyanate) and the like are used. As the chain extender, polyalcohols having low molecular weight and aromatic diamines, etc. are used.

The polyurethane adhesive is preferably a polyurethane cured by adding a cross linking agent afterwards into a polyurethane. Polyisocyanates are preferably used as a cross linking agent, and aliphatic or cyclo-aliphatic polyisocyanates are especially preferable in the light of weatherability. In addition, when a cross linking agent is used, it is preferable to use a cross linking accelerator in combination.

Polyisocyanate-based cross linking agents are polyisocyanate compounds having not less than 2 of isocyante groups in a molecule. Examples of this kind of cross linking agents are shown below; 1,4-tetramethylene diisocyanate, hexamethylene diisocyanate, 2,2,4-trimethylhexane-1,6-diisocyanate, lysinemethylester diisocyanate, p-phenylene diisocyanate, tolylene diisocyanate, biphenyl diisocyanate, 3,3'-dimethyl-4,4'-biphenylene diisocyanate, methylene bis(phenyl isocyanate), bis(isocyanate ethyl)fumarate, isophorone diisocyanate, methylcyclohexyl diisocyanate, 2-isocyanate ethyl-2,6-diisocyanatehexanoate. Moreover, modified compounds of the above isocyanate, for example, multi-functional isocyanate compounds with not less than 3 functional groups such as isocyanurate type and urethane type can be used. The amount of the cross linking agent is preferably in the range of 1 to 60 parts by weight, more preferably in the range of 10 to 40 parts by weight, based on the weight of 100 parts by weight of polyurethane.

A glass transition temperature after cross linking of the polyurethane resin used in the adhesive layer in the present invention is preferably in the range of -20°C to +60°C.

The adhesive layer in the present invention has a characteristic that a tackifier, an oil and a plasticizer are substantially not contained, unlike conventional adhesive layers. Because of this, the adhesive layer in the present invention has superior chemical stability, and the surface of articles on which binding or the like is applied can be prevented from staining.

In addition, the adhesive layer may contain at least one member of other additives. As the additives, dyestuffs, pigments, fillers, antioxidants and ultra-violet absorbents are illustrated as example. As the fillers, zinc oxide, titanium oxide, silica, calcium carbonate, and barium sulfate are illustrated as example. As the antioxidants, anilide-, phenol-, phosphite-, and thioester-based antioxidants are illustrated as example. As the ultra-violet absorbents, benzophenone- and bonzotriazole-based ultra-violet absorbents are illustrated as example.

Thickness of the adhesive layer does not have limitation particularly, but it is usually in the range of 5 to 40 µ m, and preferably in the range of 10 to 25 µm.

In addition, since the adhesive layer in the present invention has printability of pictures and characters, it is possible to put printed pictures or characters on the surface of the adhesive layer.

In addition, the surface of the adhesive layer can be covered with a release liner.

The release liner is composed of a support base material having a releasing property on at least one side of the liner. The surface of the side with releasing property of the support base material may be coated with a release agent or may not be coated.

As the support base material, for example, a paper, a synthetic paper and a plastic film are illustrated. As the paper, for example, a glassine paper and a polyethylene laminate paper are illustrated, and as the plastic film, for example, films of plastics such as polyolefin resins like polyethylene resins and polypropylene resins, and polyester resins like polybutylene terephthalate resins and polyethylene terephthalate resins, and acetate resins, polystyrene resins and polyvinylchloride resins are selected. In addition, as a suitable operative example of the release liner without a release agent coating, a polyolefin film such as polypropylene film and polyethylene film, and paper and other film laminated with these polyolefin film are illustrated.

As a release agent used for the release liner, silicone resin, alkyd resin, fluorocarbon resin, and resin containing long-chain alkyl groups are illustrated.

Thickness of a release liner is not particularly limited and may be chosen appropriately.

It is preferable for the adhesive sheet of the present invention to have a form of a plane sheet or a rolled shape.

The adhesive sheet of the present invention can have various embodiments.

Examples of the adhesive sheet of the present invention is explained based on the drawings in the following.

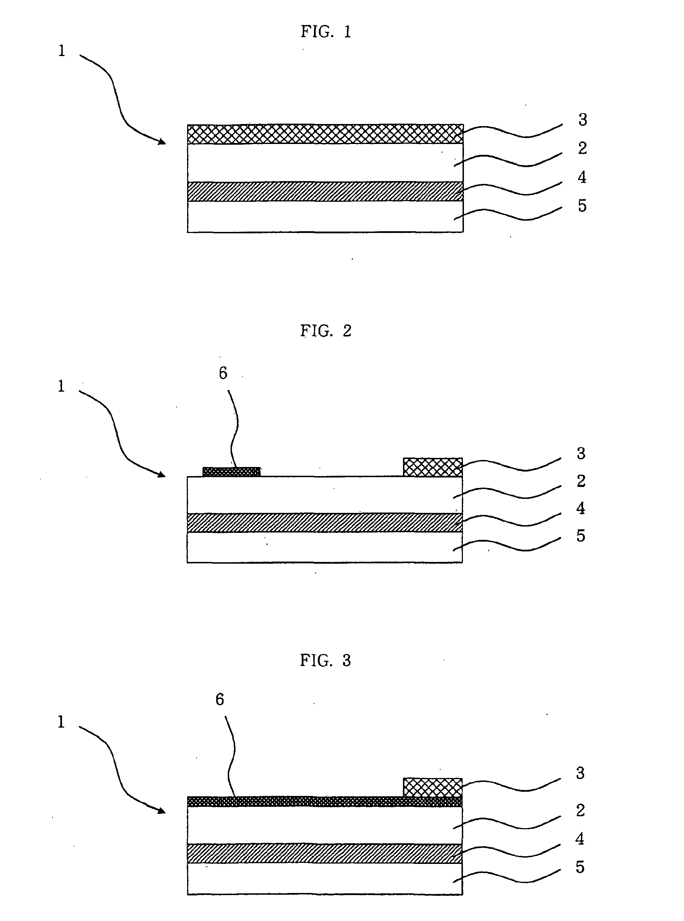

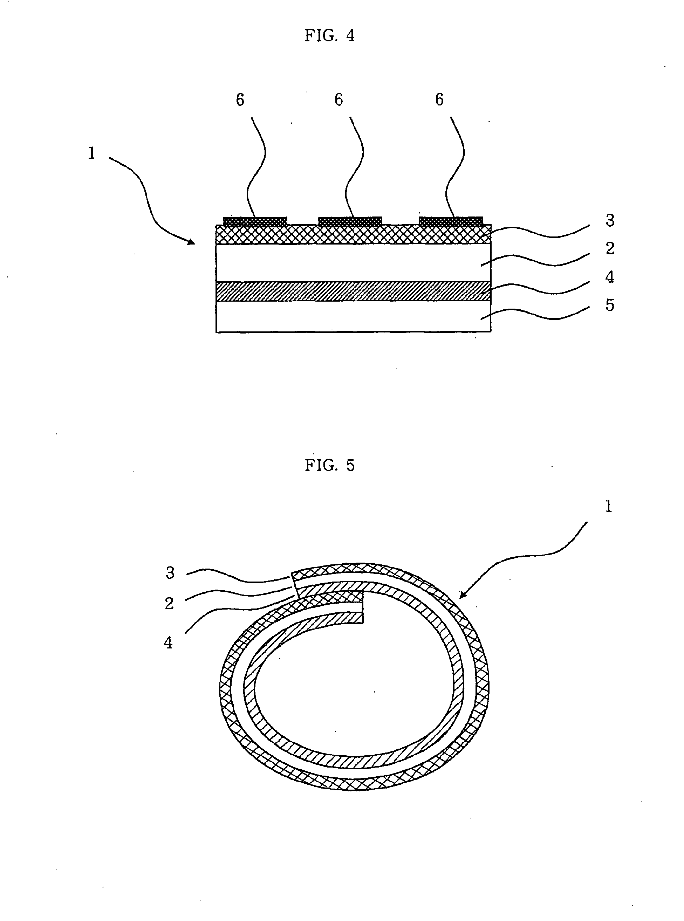

Examples of the adhesive sheet **1** of the present invention is an adhesive sheet which comprises the photocured urethane resin layer **3** formed on all of a surface of the base material **2** and the adhesive layer **4** formed on all of the surface of backside of the base material **2,** as shown in FIG. 1 and an adhesive sheet which comprises the photocured urethane resin layer **3** formed on a part of a surface of the base material **2** and an adhesive layer **4** formed on all of a surface of backside of the base material **2,** as shown in FIG. 2. The adhesive sheets **1** may have the printing layer **6** formed on the surface of the base material **2** as shown in FIG. 2, the printing layer **6** formed on the surface of backside of the base material **2** as not shown in drawings, and a printing layer **6** formed on all of the surface of the base material **2** and the photocured urethane resin layer **3** formed on the surface of the printing layer **6** as shown in FIG. 3. Further, the adhesive sheets **1** may have the printing layer **6** formed on the surface of the photocured urethane resin layer **3** as shown in FIG. 4. Furthermore, the adhesive sheets 1 may have the release sheet **5** covered on the surface of the adhesive layer **4** as shown in FIG. 1 to FIG. 4.

The adhesive sheet of the present invention can be used for various uses performing the adhesion of the adhesive layer and the photocured urethane resin layer. Utilization for binding bands for distinguishing, display labels and management labels for consumer goods, articles and the like, and binding tapes for articles are useful particularly.

The utilization for the binding tape is explained based on the drawing.

A state that an adhesive sheet **1** as shown in FIG. 1 is wound around a wrist, and then the surface of the photocured urethane resin layer **3** formed on the surface of the base material **2** of the end portion of the adhesive sheet **1** and the surface of the adhesive layer **4** formed on the backside of the base material **2** of the other end portion of the adhesive sheet **1** are laminated and adhered by pressing, is shown in FIG. 5.

### EXAMPLES

The present invention will be explained by examples more concretely. In addition, the present invention was not restricted at all by these examples.

Pressure-sensitive adhesive strength measurement test, measurement test of adhesive strength, ball tack measurement test, and measurement test of type A durometer hardness in examples were performed according to the methods as follows.

### (1) Pressure-sensitive adhesive strength measurement test:

Pressure-sensitive adhesive strength of an adhesive layer in an adhesive sheet was measured according to Japanese Industrial Standard Z 0237.8.3.1. Here stainless steel board was used as testing board.

### (2) measurement test of adhesive strength at 30 minutes after adhesion:

The photocured urethane resin layer and the adhesive layer in an adhesive sheet were located facing together and adhered by pressing, and then at 30 minutes after adhesion by pressing, the adhered adhesive layer side was peeled off (in T type peeling) at peeling rate of 300 mm/min. The load of peeling was measured.

### (3) Ball tack measurement test:

The ball tacks of the photocured urethane resin layer and the adhesive layer of an adhesive sheet were measured according to Japanese Industrial Standard Z0237.12. Measurement was performed under the condition of inclination angle of board of 30° , and of unit of 1/32 inch at measurement temperature of 23°C.

### (4) Measurement test of type A durometer hardness:

The type A durometer hardness of the adhesive layer was measured according to Japanese Industrial Standard K6253.5.4.

### Example 1

An polyurethane adhesive solution was prepared by mixing 100 parts by weight of polyurethane resin (Dainichiseika Colour & Chemicals Mfg. Co., Ltd. REZAMINE UD8300LP, 50 weight % of non-volatile matter), 30 parts by weight of cross linking agent of polyisocyanates compound (Dainichiseika Colour & Chemicals Mfg. Co., Ltd. REZAMINE NE, 75 weight % of non-volatile matter), and 0.5 parts by weight of amine/tin cross linking accelerator (Dainichiseika Colour & Chemicals Mfg. Co., Ltd. REZAMINE HI215 ACCELERATOR, 5 weight % of non-volatile matter).

The polyurethane adhesive solution was applied on the surface of backside of base material consisting of the polyvinyl chloride sheet (Bando Co., Ltd., 13818, thickness 80 µm) to obtain the thickness of the adhesive layer after drying of 12 µm, the layer was dried. In the next step, the adhesive layer was covered with a release liner consisting of the biaxially oriented polypropylene film (Oji Seishi Co., Ltd., ALPHANE PP40 PU002) having a thickness of 40 µm.

Next, a mixture liquid was prepared by mixing 100 parts by weight of urethane acrylate (THE NIPPON SYNTHETIC CHEMICAL INDUSTRY CO. , LTD. SHIKO UV-7000B, 100 weight % of non-volatile matter) as a photocurable urethane curing component and 4 parts by weight of photopolymerization initiator (CHIBA SPECIALLTY CHIMICALS Co., Ltd. DAROCURE-1173, 100 weight % of non-volatile matter). The mixture liquid was applied by screen printing on the surface of a polyvinyl chloride sheet of a base material and then ultraviolet ray was irradiated (two lamps × 160 W) to the curable composition layer for 6 seconds. The curable composition layer was cured to obtain a photocured urethane resin layer(thickness 5 µm). Thus, an adhesive sheet was made.

The pressure-sensitive adhesive strength value of the polyurethane adhesive layer measured according to Japanese Industrial Standard Z0237.8.3.1 was 0 N/cm. Further, the ball tack value of the adhesive layer was 2. Furthermore, the type A durometer hardness of the adhesive layer was 78. Also, glass transition temperature of the obtained polyurethane adhesive layer was + 46 °C. Material properties of the adhesive sheet were shown in Table 1.

The adhesive sheet was cut to form an adhesive tape having a width of 3 cm and a length of 25 cm. The adhesive tape was wound around a wrist, and then the photocured urethane resin layer and the adhesive layer of an adhesive sheet were located facing together and adhered by pressing. There was no sticky feeling. Workability was good. The adhesion at the adhered portion by pressing was strong and good. Further, when the adhesive sheet was peeled after about 3 hours, adhesive residue to the wrist and inflammation of skin were not observed.

### Example 2

An adhesive sheet was prepared in the same method as described in Example 1 except that a mixture liquid prepared by mixing 100 parts by weight of urethane acrylate (THE NIPPON SYNTHETIC CHEMICAL INDUSTRY CO., LTD. SHIKO UV-3520TL, 70 weight % of non-volatile matter) and 4 parts by weight of photopolymerization initiator (CHIBA SPECIALLTY CHIMICALS Co., Ltd. DAROCURE-1173, 100weight % of non-volatilematter) was used as the mixture liquid of the photocurable urethane curing component and the photopolymerization initiator, and the curable composition layer was dried at 60 °C for 3 minutes after application by printing.

Material properties of the adhesive sheet were shown in Table 1.

The adhesive tape was wound around a wrist, in the same method as described in Example 1. There was no sticky feeling. Workability was good. The adhesion at the adhered portion by pressing was strong and good. Further, when the adhesive sheet was peeled after about 3 hours, adhesive residue to the wrist and inflammation of skin were not observed.

### Example 3

An adhesive sheet was prepared in the same method as described in Example 1 except that a mixture liquid prepared by mixing 100 parts by weight of urethane acrylate (THE NIPPON SYNTHETIC CHEMICAL INDUSTRY CO., LTD., SHIKO UV-6100B, 100 weight % of non-volatile matter) and 4 parts by weight of photopolymerization initiator (CHIBA SPECIALLTY CHIMICALS Co., Ltd. DAROCURE-1173, 100 weight % of non-volatile matter) was used as the mixture liquid of photocurable urethane curing component and the photopolymerization initiator.

Material properties of the adhesive sheet were shown in Table 1.

The adhesive tape was wound around a wrist, in the same method as described in Example 1. There was no sticky feeling. Workability was good. The adhesion at the adhered portion by pressing was strong and good. Further, when the adhesive sheet was peeled after about 3 hours, adhesive residue to the wrist and inflammation of skin were not observed.

### Example 4

An adhesive sheet was prepared in the same method as described in Example 1 except that a mixture liquid prepared by mixing 100 parts by weight of urethane acrylate (THE NIPPON SYNTHETIC CHEMICAL INDUSTRY CO., LTD., SHIKO UV-3200B, 100 weight % of non-volatile matter) and 4 parts by weight of photopolymerization initiator (CHIBA SPECIALLTY CHIMICALS Co., Ltd. DAROCURE-1173, 100 weight % of non-volatile matter) was used as the mixture liquid of the photocurable urethane curing component and the photopolymerization initiator.

Material properties of the adhesive sheet were shown in Table 1.

The adhesive tape was wound around a wrist, in the same method as described in Example 1. There was no sticky feeling. Workability was good. The adhesion at the adhered portion by pressing was strong and good. Further, when the adhesive sheet was peeled after about 3 hours, adhesive residue to the wrist and inflammation of skin were not observed.

**Table 1**

| Example | | 1 | 2 | 3 | 4 |
|---|---|---|---|---|---|
| | Adhesive strength (N/cm) | 7.5 | 9.1 | 2.9 | 2.4 |
| Photocured urethane resin layer | Ball tack | less than 2 | less than 2 | less than 2 | less than 2 |
| | Tg(°C) | 52 | 46 | 0 | -8 |
| Photocurable urethane curing component | Weight average molecular weight | 3500 | 14000 | 6700 | 10000 |
| | Functional group number | 2.3 | 2 | 2 | 2 |
| | Kind of di-isocyanate | aliphatic | aliphatic | aromatic | aliphatic |
| | Kind of polyol | ester, ether | ester | ether | ester |

In the adhesive sheet of the present invention, the photocured urethane resin layer and the adhesive layer have extremely small tack. Therefore, the adhesive sheet does not adhere to the articles and the like. And if the photocured urethane resin layer and the adhesive layer of an adhesive sheet are located facing together and adhered after winding the adhesive sheet around the articles and the like, the both layers are adhered and the adhesive sheet can be fixed sufficiently to the articles. Further, if the adhesive sheet of the present invention is peeled from the article fixed by the adhesive sheet, the adhesive sheet can prevent adhesive res idue to the article, discoloration and stain of the article, and adhesion to the article. Further, the adhesive sheet can prevent a discoloration and a decrease of pressure-sensitive adhesive strength after long term storage.

## Claims

1. An adhesive sheet which comprises a base material, a photocured urethane resin layer formed on all or a part of a surface of the base material and an adhesive layer formed on all or a part of a surface of backside of the base material, wherein the adhesive layer comprises a polyurethane adhesive, and has a ball tack value of not more than 3 and a pressure-sensitive adhesive strength value to stainless steel board in Japanese Industrial Standard Z0237 of not more than 2 N/cm.

2. An adhesive sheet which comprises a base material, a photocured urethane resin layer formed on a part of a surface of the base material and an adhesive layer formed on another part of a surface of the base material, wherein the adhesive layer comprises a polyurethane adhesive, and has a ball tack value of not more than 3 and a pressure-sensitive adhesive strength value to stainless steel board in Japanese Industrial Standard Z0237 of not more than 2 N/cm.

3. The adhesive sheet as claimed inclaim 1 or claim 2, wherein the photocured urethane resin layer is prepared by photocuring urethane (meth) acrylate.

4. A method of preparing an adhesive sheet which comprises applying a polyurethane adhesive solution on all or a part of a surface of the base material or a surface of backside of the base material and drying to form an adhesive layer having a ball tack value of not more than 3 and a pressure-sensitive adhesive strength value to stainless steel board in Japanese Industrial Standard Z0237 of not more than 2 N/cm, and applying a photocurable urethane curing component on all or a part of the surface of the base material and then irradiating light to form a photocured urethane resin layer.
